# EUROPÄISCHE PATENTSCHRIFT

(11) **EP 2 780 182 B1**
(45) Veröffentlichungstag und Bekanntmachung des Hinweises auf die Patenterteilung: **29.03.2017**
(21) Anmeldenummer: 12773326.9
(22) Anmeldetag: 17.10.2012
(51) Int. Cl.: B60G 9/02, B60G 11/28

(54) **STARRACHSE MIT LUFTFEDERUNG**
RIGID AXLE WITH AIR SUSPENSION
ESSIEU RIGIDE À SUSPENSION PNEUMATIQUE

(30) Priorität: 17.11.2011 DE 102011086517
(43) Veröffentlichungstag der Anmeldung: 24.09.2014
(73) Patentinhaber: ZF Friedrichshafen AG, 88046 Friedrichshafen (DE)
(72) Erfinder: HELM, Eike, 49632 Essen (Oldb) (DE)
(86) Internationale Anmeldenummer: PCT/EP2012/070585
(87) Internationale Veröffentlichungsnummer: WO 2013/072152

(56) Entgegenhaltungen:
- WO-A1-2009/053491
- CH-A- 381 102
- DE-A1- 10 334 156
- DE-A1- 10 351 465
- FR-A1- 2 529 838
- US-A1- 2008 067 771

## Beschreibung

Die Erfindung betrifft eine Starrachse mit direkter Luftfederung gemäß dem Oberbegriff des Patentanspruchs 1.

Bei Starrachsen mit direkter Luftfederung, beispielsweise bei luftgefederten Hinterachsen von Lastkraftwagen, sind die Federbälge der Luftfederung direkt, also unmittelbar zwischen dem Achskörper der Starrachse und einer entsprechenden Federbalgaufnahme am Fahrzeugchassis (beispielsweise am Rahmenlängsträger) angeordnet. Dabei nehmen die Federbälge aufgrund ihres großen Volumens und des damit verbundenen großen Außendurchmessers einen erheblichen Bauraum zwischen dem Achskörper und dem Rahmenlängsträger ein.

Neben den durch die Federbälge der Luftfederung gebildeten Federelementen benötigen gattungsgemäße Starrachsen zur Schwingungsdämpfung zwischen Achse und Chassis zudem auf jeder Seite der Achse zumindest einen Schwingungsdämpfer. Der jeweilige Schwingungsdämpfer ist dabei vorzugsweise im selben Bereich zwischen Achskörper und Chassis angeordnet wie das jeweilige Federelement der Achse, vorliegend also der Federbalg der Luftfederung. Aus der CH 381 102 A ist beispielsweise eine Achsanordnung für schwere Straßenfahrzeuge bekannt mit einem starren Achskörper, welcher über Längslenker an einem Untergestell angebunden ist. Zur Abfederung des Achskörpers gegenüber dem Chassis des Fahrzeuges ist eine Luftfederung vorgesehen. Die Bewegungen der Längslenker werden durch Stoßdämpfer gedämpft. Generell ist dabei eine Anordnung des Schwingungsdämpfers so weit außen an der Achse wie möglich wünschenswert, um die Einfederungsbewegungen der Achse bzw. der jeweiligen Räder möglichst 1:1 proportional in entsprechende Dämpfungsbewegungen des Schwingungsdämpfers umzusetzen. Hierzu ist der Schwingungsdämpfer des Weiteren idealerweise parallel zur Hochachse des Fahrzeuges angeordnet.

Diese wünschenswerte Anordnung des Schwingungsdämpfers ist aufgrund der großen Abmessungen bzw. Durchmesser der Federbälge von Luftfederungen jedoch problematisch, da die jeweilige Luftfeder den Bauraum zwischen Achskörper und

Chassis bereits größtenteils für sich in Anspruch nimmt. Es ist bei gattungsgemäßen luftgefederten Starrachsen daher erforderlich, den Schwingungsdämpfer auf geeignete Weise an der Luftfeder vorbei zu führen.

Hierzu sind Lösungen bekannt, bei denen der Schwingungsdämpfer am Achskörper befestigt und schräg an der Luftfeder vorbei in Richtung auf die entsprechende Schwingungsdämpfer-Befestigung am Chassis geführt wird. Das schräge Vorbeiführen des Schwingungsdämpfers an der Luftfeder führt jedoch zu einer starken Schiefstellung des Schwingungsdämpfers - der Schwingungsdämpfer ist nicht parallel sondern in einem spitzen Winkel zur Hochachse angeordnet. Hierdurch wird der Wirkungsgrad des Schwingungsdämpfers verschlechtert, da der - durch Einfederungsbewegungen von Rad bzw. Achse induzierte - Dämpfungsweg des Schwingungsdämpfers (aufgrund dessen Schiefstellung) geometrisch bedingt zwangsläufig kleiner ausfällt als der jeweilige Einfederungsweg des Rades bzw. der Achse.

Dies bedeutet, dass massivere bzw. stärkere Schwingungsdämpfer eingesetzt werden müssen, um den gleichen Dämpfungseffekt zu erhalten, den ein schlankerer Schwingungsdämpfer bieten würde, der im Wesentlichen parallel zum Einfederungsweg bzw. parallel zur Luftfeder angeordnet wäre.

Andere bekannte Vorschläge zur Lösung der Bauraumproblematik zwischen Luftfeder und Schwingungsdämpfer bestehen darin, entweder den Schwingungsdämpfer oder die Luftfeder parallel zu versetzen, so dass der Schwingungsdämpfer auf diese Weise wieder parallel zum Einfederungsweg bzw. parallel zur Luftfeder angeordnet werden kann. Sowohl die Maßnahme der parallelen Verlegung des Schwingungsdämpfers neben die Luftfeder, als auch die hierzu alternative Versetzung der Luftfeder selbst, ist jedoch konstruktiv aufwändig und erfordert gewichtsmäßig nachteilige zusätzliche Aufnahmen für den versetzten Schwingungsdämpfer bzw. die versetzte Luftfeder, die am Achskörper angeordnet werden müssen.

Mit diesem Hintergrund ist es Aufgabe der vorliegenden Erfindung, eine Starrachse mit direkter Luftfederung zu schaffen, bei der die Anordnung des Schwingungsdämpfers einen optimalen Wirkungsgrad des Schwingungsdämpfers ermöglicht, indem die Einfederungsbewegungen von Rad bzw. Achse möglichst im Verhältnis 1:1 auf den Schwingungsdämpfer übertragen werden.

Diese Aufgabe wird durch eine Starrachse mit den Merkmalen des Patentanspruchs 1 gelöst. Bevorzugte Ausführungsformen sind in den Unteransprüchen angegeben.

Die Erfindung betrifft eine Starrachse mit direkter Luftfederung insbesondere für ein Nutzkraftfahrzeug. Die Starrachse umfasst einen an Längslenkern aufgehängten Achskörper sowie Luftfedern und Schwingungsdämpfer. Dabei zeichnet sich die Starrachse dadurch aus, dass der achsseitige Angriffspunkt des Schwingungsdämpfers am Längslenker angeordnet ist.

Unter dem Begriff "direkte Luftfederung" ist im Sinne der Erfindung eine Anordnung der Luftfedern direkt (also in gerader Linie, entsprechend der Einfederungsrichtung) zwischen dem Achskörper der Starrachse und dem Fahrzeugchassis zu verstehen, mit anderen Worten eine Anordnung der Luftfedern am Fahrzeug direkt vertikal oberhalb des Achskörpers der Starrachse.

Die Starrachse ist zumeist derart ausgebildet, dass auf jeder Fahrzeugseite zumindest ein Längslenker, eine Luftfeder und ein Schwingungsdämfper angeordnet ist.

Durch die Anordnung des achsseitigen Angriffspunkts des Schwingungsdämpfers am Längslenker der Starrachse ergibt sich die Möglichkeit, den Schwingungsdämpfer parallel gegenüber der Luftfeder zu versetzen und somit die Längsachse des Schwingungsdämpfers parallel zur Einfederungsrichtung des Rades bzw. der Achse zu halten. Der Schwingungsdämpfer verläuft mit seiner Längsachse somit annähernd parallel, insbesondere parallel zur Hochachse des Fahrzeugs.

Dabei ist im Unterschied zum Stand der Technik jedoch keine zusätzliche Halterung für den achsseitigen Angriffspunkt des Schwingungsdämpfers am Achskörper erforderlich, die konstruktiv aufwändig wäre und die ungefederten Massen der Achse vergrößern würde. Vielmehr übernimmt bei der Erfindung der ohnehin vorhandene Längslenker die Aufgabe der Aufnahme und Lagerung des achsseitigen Angriffspunkts des Schwingungsdämpfers. Damit sind auch keine zusätzlichen Bauteile oder Baugruppen zur Aufnahme des Schwingungsdämpfers erforderlich, und es ergibt sich allenfalls eine marginale Gewichtszunahme der ungefederten Massen der Achse dadurch, dass der vorhandene Längslenker zur Aufnahme des Schwingungsdämpferendes umgestaltet wird.

Die Erfindung wird zunächst einmal unabhängig davon verwirklicht, wo der achsseitige Angriff des Schwingungsdämpfers am Längslenker erfolgt. So kann der Schwingungsdämpfer beispielsweise innerhalb des zwischen den beiden Lagerpunkten des Längslenkers liegenden Längenbereichs des Lenkers angreifen, solange sich dabei eine im Wesentlichen parallele Ausrichtung des Schwingungsdämpfers zur Einfederungsrichtung bzw. zur Luftfeder einhalten lässt.

Gemäß einer besonders bevorzugten Ausführungsform der Erfindung weist der Längslenker jedoch eine Verlängerung über seine achsseitige Lagerstelle hinaus auf. Dabei ist der achsseitige Angriffspunkt des Schwingungsdämpfers durch die Verlängerung des Längslenkers gebildet.

Diese Ausführungsform ist besonders vorteilhaft insofern, als sich auf diese Weise durch die Verlängerung des Längslenkers über seine achsseitige Lagerstelle hinaus eine proportionale, geometrisch bedingte Vergrößerung des am Dämpfer auftretenden Dämpfungswegs relativ zum Einfederungsweg der Achse ergibt. Da der Dämpfer auf diese Weise beim Einfedern sogar einen größeren Weg zurücklegt als die Luftfeder, kann ein entsprechend leichter bzw. schlanker dimensionierter Schwingungsdämpfer - bei gleicher Dämpfungswirkung - verwendet werden.

Vorzugsweise ist dabei die Verlängerung des Längslenkers als gabelförmige Lageraufnahme ausgebildet. Auf diese Weise kann das achsseitige Lagerauge des Schwingungsdämpfers direkt in der gabelförmigen Lageraufnahme des Längslenkers angeordnet und beispielsweise mittels eines Bolzens mit dem Längslenker verbunden werden, wodurch sich eine besonders kostengünstige und gewichtssparende Realisierung der achsseitigen Dämpferaufnahme ergibt.

Bei der Erfindung weist der Achskörper einen Durchbruch bzw. eine Ausnehmung auf, wobei der Längslenker den Achskörper in der Ausnehmung durchgreift. Diese Ausführungsform kommt insbesondere bei Starrachsen in Betracht, bei denen der Achskörper als Gussteil ausgebildet ist. Gegossene Achskörper benötigen gegenüber einem als Schmiedeteil ausgebildeten Achskörper üblicherweise einen größeren Querschnitt, insbesondere eine entlang der Einfederungsrichtung größere Querschnittslänge, um die Belastungen beim Fahrbetrieb aufnehmen zu können. Die Ausnehmung im Achskörper kann dabei insbesondere im Bereich der neutralen Faser des Achskörpers angeordnet sein, so dass sich durch die Ausnehmung nur eine geringfügige Beeinträchtigung der Biegesteifigkeiten des Achskörpers ergibt.

Dank der Ausnehmung kann das achsseitige Lager des Längslenkers zudem auf der dem Längslenker abgewandten Seite des Achskörpers angeordnet werden. Hierdurch lässt sich zunächst einmal ohne zusätzlichen Platzbedarf am Chassis die wirksame Länge des Längslenkers vergrößern, was für die Parallelführung der Achse von Vorteil ist. Zudem kann die ggf. vorhandene Verlängerung des Längslenkers über seine achsseitige Lagerstelle hinaus, die in diesem Fall gleichzeitig den achsseitigen Angriffspunkt des Schwingungsdämpfers bildet, dank dieser Ausführungsform ebenfalls problemlos jenseits des Achskörpers angeordnet werden, ohne dass eine komplizierte und für den Kraftfluss nachteilige Gestaltung des Achskörpers und/oder des Längslenkers erforderlich wäre.

Eine weitere bevorzugte Ausgestaltung der Erfindung sieht vor, dass die Starrachse eine Vorderachse oder lenkbare Vorlaufachse ist. Letztere bilden üblicherweise zusammen mit einer angetriebenen, nicht gelenkten Hinterachse eine Tandemachse, wobei die Vorlaufachse zur weiteren Verringerung von Kraftstoffverbrauch und Reifenabrieb bei geringeren Lasten ggf. auch liftbar ausgeführt sein kann. Bei Vorderachsen oder lenkbaren Vorlaufachsen sind die Bauraumverhältnisse im Bereich von Luftfeder und Schwingungsdämpfer noch mehr eingeschränkt, da bei diesen Achsen hier zusätzlich schwenkbare Radträger, Spurhebel, Lenkhydraulik und Spurstangen angeordnet werden müssen.

Auch hier ergeben sich somit Vorteile durch die Starrachse gemäß der Erfindung, bei der der achsseitige Angriffspunkt des Schwingungsdämpfers besonders bauraumsparend und kompakt am Längslenker angeordnet ist, wodurch zudem auch der Schwingungsdämpfer sehr nahe an der Luftfeder und damit platzsparend angeordnet werden kann.

Im Folgenden wird die Erfindung anhand lediglich Ausführungsbeispiele darstellender Zeichnungen näher erläutert. Dabei zeigt:
Fig. 1: in einer Seitenansicht eine luftgefederte Starrachse mit Schwingungsdämpfer gemäß dem Stand der Technik;
Fig. 2: in einer isometrischen Darstellung eine luftgefederte Starrachse gemäß einer Ausführungsform der vorliegenden Erfindung; und
Fig. 3: die Starrachse gemäß Fig. 2 in einer Seitenansicht ähnlich Fig. 1.

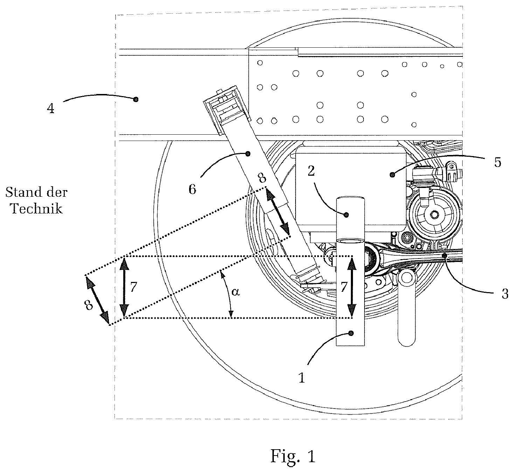

Fig. 1 zeigt zunächst eine direkt luftgefederte, lenkbare Starrachse aus dem Stand der Technik. Man erkennt den Achskörper 1 mit der daran angeordneten Lageraufnahme 2 für den Achsschenkelbolzen des (nicht dargestellten) lenkbaren Radträgers, sowie einen Längslenker 3 zur Führung des Achskörpers 1. Direkt zwischen dem Achskörper 1 und dem Fahrzeugchassis 4 ist eine Luftfeder 5 angeordnet, die den Achskörper 1 federnd gegenüber dem Chassis 4 abstützt.

Zur Schwingungsdämpfung zwischen den ungefederten Massen der Achse und dem Fahrzeug weist die dargestellte Achse auf jeder Fahrzeugseite einen Schwingungsdämpfer 6 auf. Bei dem dargestellten Stand der Technik muss der Schwingungsdämpfer 6 zwischen Achse und Chassis stark schräggestellt angeordnet werden, um nicht mit der Luftfeder 5 zu kollidieren, da diese prinzipbedingt einen großen Durchmesser aufweist.

Aufgrund der Schrägstellung des Schwingungsdämpfers 6 teilen sich die Einfederungsbewegungen 7 des Achskörpers 1 in Form der Dämpferbewegungen 8 dem Schwingungsdämpfer 6 annähernd proportional mit. Dabei sind die Dämpferbewegungen 8 jedoch geometrisch bedingt um den Kosinus der Schrägstellung α des Schwingungsdämpfers 6 kleiner als die Einfederungsbewegungen 7 der Achse, wie in Fig. 1 anhand der eingezeichneten, punktierten Hilfslinien ersichtlich.

Da der Schwingungsdämpfer 6 auf diese Weise die erforderliche Dämpfungswirkung auf einem kleineren Weg 8 erbringen muss, für die einem parallel zur Einfederungsrichtung (zeichnungsbezogen vertikal) angeordneten Schwingungsdämpfer der größere Weg 7 zur Verfügung stehen würde, muss der Schwingungsdämpfer 6 dementsprechend größere Dämpfungskräfte erzeugen, um dieselbe Schwingungsdämpfung wie ein vertikal angeordneter Schwingungsdämpfer zu bewirken. Dies bedeutet, dass der Schwingungsdämpfer 6 beim Stand der Technik entsprechend stärker und damit großvolumiger und schwerer dimensioniert werden muss.

Auch ist die aufgrund der schrägen Anordnung des Schwingungsdämpfers 6 entstehende Horizontalkomponente der Dämpferkraft unerwünscht und belastet unnötig die Achse bzw. deren Aufhängung mittels der Längslenker 3.

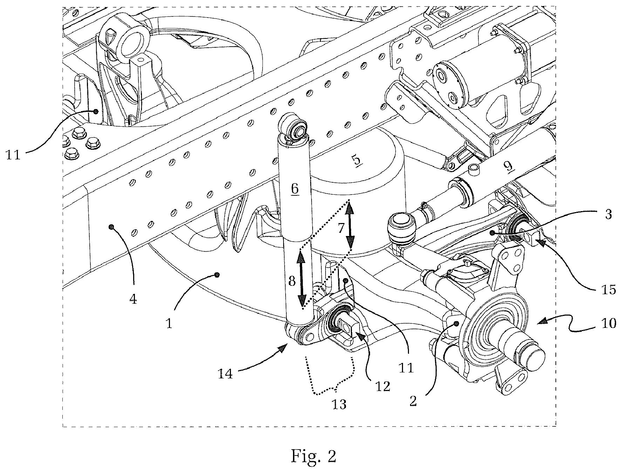

Fig. 2 zeigt eine direkt gefederte Starrachse gemäß einer Ausführungsform der vorliegenden Erfindung, hier in isometrischer Darstellung. Ein der dargestellten Achse handelt es sich um eine lenkbare Vorlaufachse, die zusammen mit einer angetriebenen (nicht dargestellten) Hinterachse eine Tandemachse bildet. Man erkennt wieder den (hier als Gussteil ausgeführten) Achskörper 1 mit der Lageraufnahme 2 für den mittels einer Lenkhydraulik 9 lenkbaren Radträger 10, sowie die Luftfeder 5, die auch hier wieder unmittelbar oberhalb des Achskörpers 1 zwischen Achskörper 1 und Chassis 4 angeordnet ist.

Ferner ist der Achskörper 1 wieder mittels Längslenkern 3 mit dem Chassis 4 verbunden. Die Längslenker 3 durchgreifen bei der dargestellten Ausführungsform den Achskörper 1 in entsprechenden Ausnehmungen 11, wodurch die achsseitigen Lagerstellen 12 der Längslenker 3 am Achskörper 1 jenseits der zur Führung der Achse wirksamen Länge der Längslenker 3 angeordnet werden können (zeichnungsbezogen links vom Achskörper 1). Auf diese Weise vergrößert sich zunächst einmal (faktisch ohne zusätzlichen Bauraumbedarf) die wirksame Länge der Längslenker 3, was der Achsführung und damit dem Einfederungs- und Fahrverhalten zugute kommt.

Zusätzlich wird hierdurch die Anlenkung des achsseitigen Endes des Schwingungsdämpfers 6 im Bereich einer am Längslenker 3 angeordneten Verlängerung 13 möglich. Das Ende der Verlängerung 13 des Längslenkers 3 ist hierzu gabelförmig ausgebildet, um das achsseitige Lager 14 des Schwingungsdämpfers 6 aufzunehmen. Durch die Verlängerung 13 des Längslenkers 3 ergibt sich somit die Möglichkeit, das achsseitige Lager 14 des Schwingungsdämpfers 6 mit entsprechendem horizontalem Abstand 13 vom Achskörper 1 (bzw. vom achsseitigen Lager 12 des Längslenkers 3) anzuordnen, so dass der Schwingungsdämpfer 6 fahrzeugbezogen vertikal bzw. parallel zur Einfederungsrichtung angeordnet und parallel zur Anordnung der Luftfeder 5 ausgerichtet werden kann.

Dies bedeutet, dass der Dämpfungsweg 8 des Schwingungsdämpfers nicht mehr (wie beim Stand der Technik, vgl. Fig. 1) kleiner ist als der Einfederungsweg 7 der Luftfeder 5 bzw. der Achse 1, sondern zumindest gleich groß wie der Einfederungsweg 7 der Achse. Aufgrund der Anlenkung des Achskörpers 1 über den Längslenker 3 am Chassis 4, wodurch das achsseitige Lager 12 des Längslenkers 3 beim Einfedern entlang einer Kreislinie um das chassisseitige Lager 15 des Längslenkers 3 geführt wird, ist der Dämpfungsweg 8 des Schwingungsdämpfers 6 sogar proportional um denjenigen Prozentsatz größer, der der zusätzlichen Länge 13 des Längslenkers 3 bezogen auf die Länge des Längslenkers 3 zwischen dem chassisseitigen Lager 15 und dem achsseitigen Lager 12 des Achskörpers 1 entspricht.

Dies bedeutet, dass der Schwingungsdämpfer 6 bei dieser Ausführungsform der erfindungsgemäßen Starrachse sogar einen größeren Dämpfungsweg 8 zurücklegt, als dies der Einfederungsbewegung 7 der Achse 1 entspricht. Hierdurch werden die vom Dämpfer aufzubringenden Dämpfungskräfte reduziert, wodurch ein entsprechend schlankerer und damit bauraum- und gewichtssparender Schwingungsdämpfer 6 eingesetzt werden kann.

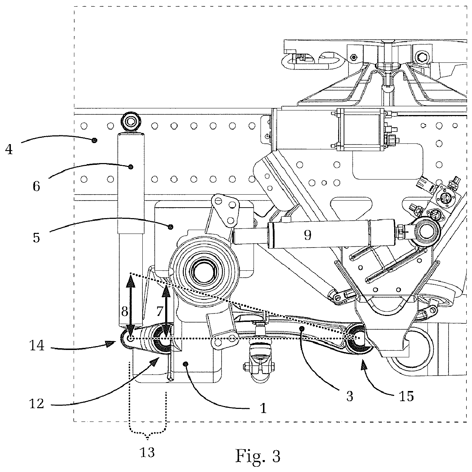

Fig. 3 zeigt die Ausführungsform der Starrachse gemäß Fig. 2 nochmals in einer Fig. 1 entsprechenden Seitenansicht. Man erkennt wieder den Achsträger 1, einen Längslenker 3, das Chassis 4, eine Luftfeder 5 sowie einen Schwingungsdämpfer 6. Ebenfalls wird in Fig. 3 ersichtlich, wie der Längslenker 3 den Achskörper 1 durchgreift (vgl. auch Fig. 2 mit der Ausnehmung 11) und jenseits des Achskörpers 1 die Verlängerung 13 zur Aufnahme der achsseitigen Lagerstelle 14 des Schwingungsdämpfers 6 bildet.

Dadurch, dass der Längslenker 3 bei Einfederungsbewegungen 7 der Achse 1 eine kreisförmige Schwenkbewegung um den chassisfesten Lagerpunkt 15 beschreibt, ergibt sich eine der Verlängerung 13 des Längslenkers 3 entsprechende, proportionale Vergrößerung des Dämpfungswegs 8, den der Schwingungsdämpfer 6 bei einer Einfederungsbewegung 7 zurücklegt.

Dies bedeutet mit anderen Worten, dass der Dämpfungsweg 8 bei der dargestellten Ausführungsform der Erfindung erheblich größer ausfällt als der Einfederungsweg 7 der Achse, wodurch ein entsprechend erheblich schlanker dimensionierter Schwingungsdämpfer 6 eingesetzt werden kann.

Es ergibt sich somit durch die Erfindung eine insgesamt kompakte, platzsparende Anordnung von Achskörper 1, Längslenker 3, Luftfeder 5 und Schwingungsdämpfer 6 und gleichzeitig eine effizientere, bauraum- und gewichtssparende Auslegung des Schwingungsdämpfers 6. Zudem fallen auch die beim Stand der Technik (vgl. Fig. 1) auftretenden horizontal wirkenden Kraftkomponenten der Dämpferkraft weg, wodurch insbesondere die Lagerstellen 12, 15 des Längslenkers 3 zusätzlich entlastet werden.

### Bezugszeichen

- 1: Achse, Achskörper
- 2: Achsschenkelbolzen-Lageraufnahme
- 3: Längslenker
- 4: Chassis
- 5: Luftfeder
- 6: Schwingungsdämpfer
- 7: Einfederungsweg (Achse)
- 8: Dämpfungsweg (Schwingungsdämpfer)
- 9: Lenkhydraulik
- 10: Radträger
- 11: Ausnehmung
- 12: Lagerstelle (Längslenker)
- 13: Lenker-Verlängerung, horizontaler Abstand
- 14: Lagerstelle (Schwingungsdämpfer)
- 15: Lagerstelle (Längslenker)

## Patentansprüche

1. Starrachse mit direkter Luftfederung für ein Nutzkraftfahrzeug, mit Achskörper (1), Längslenker (3), Luftfeder (5) und Schwingungsdämpfer (6),
wobei die Luftfeder (5) am Nutzkraftfahrzeug direkt vertikal oberhalb des Achskörpers (1) der Starrachse angeordnet ist und wobei der achsseitige Angriffspunkt (14) des zumindest einen Schwingungsdämpfers (6) am Längslenker (3) angeordnet ist, **dadurch gekennzeichnet, dass** der Längslenker (3) den Achskörper (1) in einer Ausnehmung (11) des Achskörpers (1) durchgreift.

2. Starrachse nach Anspruch 1, **dadurch gekennzeichnet, dass** der Längslenker (3) eine Verlängerung (13) über seine achsseitige Lagerstelle (12) hinaus aufweist, wobei der achsseitige Angriffspunkt (14) des Schwingungsdämpfers (6) durch die Verlängerung (13) des Längslenkers (3) gebildet ist.

3. Starrachse nach Anspruch 1 oder 2, **dadurch gekennzeichnet,**
**dass** Schwingungsdämpfer und Luftfeder annähernd parallel zueinander angeordnet sind.

4. Starrachse nach Anspruch 3, **dadurch gekennzeichnet, dass** Schwingungsdämpfer und Luftfeder annähernd parallel zur Hochachse des Nutzkraftfahrzeugs angeordnet sind.

5. Starrachse nach Anspruch 2, **dadurch gekennzeichnet, dass** die Verlängerung (13) des Längslenkers (3) als gabelförmige Lageraufnahme ausgebildet ist.

6. Starrachse nach einem der vorhergehenden Ansprüche, **dadurch gekennzeichnet, dass** die Starrachse eine Vorderachse oder lenkbare Vorlaufachse ist.

## Claims

1. Rigid axle with direct air suspension for a commercial vehicle, having an axle beam (1), trailing arm (3), air spring (5) and vibration damper (6), the air spring (5) being arranged on the commercial vehicle directly vertically above the axle beam (1) of the rigid axle, and the axle-side action point (14) of the at least one vibration damper (6) being arranged on the trailing arm (3), **characterized in that** the trailing arm (3) reaches through the axle beam (1) in a recess (11) of the axle beam (1).

2. Rigid axle according to Claim 1, **characterized in that** the trailing arm (3) has an extension (13) beyond its axle-side bearing point (12), the axle-side action point (14) of the vibration damper (6) being formed by way of the extension (13) of the trailing arm (3).

3. Rigid axle according to Claim 1 or 2, **characterized in that** the vibration damper and air spring are arranged approximately parallel to one another.

4. Rigid axle according to Claim 3, **characterized in that** the vibration damper and air spring are arranged approximately parallel to the vertical axis of the commercial vehicle.

5. Rigid axle according to Claim 2, **characterized in that** the extension (13) of the trailing arm (3) is configured as a fork-shaped bearing seat.

6. Rigid axle according to one of the preceding claims, **characterized in that** the rigid axle is a front axle or a steerable leading axle.

## Revendications

1. Essieu rigide à suspension pneumatique directe pour un véhicule automobile utilitaire, comprenant un corps d'essieu (1), un bras oscillant longitudinal (3), un ressort pneumatique (5) et un amortisseur de vibrations (6), le ressort pneumatique (5) étant disposé sur le véhicule automobile utilitaire directement verticalement au-dessus du corps d'essieu (1) de l'essieu rigide et le point d'engagement du côté de l'essieu (14) de l'au moins un amortisseur de vibrations (6) étant disposé au niveau du bras oscillant longitudinal (3), **caractérisé en ce que** le bras oscillant longitudinal (3) vient en prise à travers le corps d'essieu (1) dans un évidement (11) du corps d'essieu (1).

2. Essieu rigide selon la revendication 1, **caractérisé en ce que** le bras oscillant longitudinal (3) présente un prolongement (13) au-delà de son point de palier du côté de l'essieu (12), le point d'engagement du côté de l'essieu (14) de l'amortisseur de vibrations (6) étant formé par le prolongement (13) du bras oscillant longitudinal (3).

3. Essieu rigide selon la revendication 1 ou 2, **caractérisé en ce que** l'amortisseur de vibrations et le ressort pneumatique sont disposés approximativement parallèlement l'un à l'autre.

4. Essieu rigide selon la revendication 3, **caractérisé en ce que** l'amortisseur de vibrations et le ressort pneumatique sont disposés approximativement parallèlement à l'axe vertical du véhicule automobile utilitaire.

5. Essieu rigide selon la revendication 2, **caractérisé en ce que** le prolongement (13) du bras oscillant longitudinal (3) est réalisé sous forme de logement de palier en forme de fourche.

6. Essieu rigide selon l'une quelconque des revendications précédentes, **caractérisé en ce que** l'essieu rigide est un essieu avant ou un essieu de guidage dirigeable.
